Europäisches Patentamt

European Patent Office

Office européen des brevets

(11) Veröffentlichungsnummer : **0 319 560 B1**

# (12) EUROPÄISCHE PATENTSCHRIFT

(45) Veröffentlichungstag der Patentschrift :
04.09.91 Patentblatt 91/36

(21) Anmeldenummer : 88905572.9

(22) Anmeldetag : 23.06.88

(86) Internationale Anmeldenummer :
PCT/AT88/00048

(87) Internationale Veröffentlichungsnummer :
WO 88/10236 29.12.88 Gazette 88/28

(51) Int. Cl.⁵ : **C01F 5/00**

(54) VERFAHREN ZUR HERSTELLUNG VON REINEM MAGNESIUMOXID.

Verbunden mit 88890165.9/0297088
(europäische
Anmeldenummer/Veröffentlichungsnummer)
durch Entscheidung vom 18.07.90.

(30) Priorität : 26.06.87 AT 1621/87

(43) Veröffentlichungstag der Anmeldung :
14.06.89 Patentblatt 89/24

(45) Bekanntmachung des Hinweises auf die
Patenterteilung :
04.09.91 Patentblatt 91/36

(84) Benannte Vertragsstaaten :
AT BE CH DE ES FR GB GR IT LI NL SE

(56) Entgegenhaltungen :
DE-A- 2 137 573
FR-A- 2 471 351
US-A- 2 398 493

(56) Entgegenhaltungen :
US-A- 2 549 798
US-A- 4 200 618
Chemical Abstracts, Band 82, Nr. 22, 2. Juni
1975, (Columbus, Ohio, US) siehe Seite 133,
Zusammenfassung 142242x & CS 155586 (HO·
RAK, VACLAV et al.) 15. Dezember 1974

(73) Patentinhaber : Veitscher
Magnesitwerke-Actien-Gesellschaft
Schubertring 10-12
A-1010 Wien (AT)

(72) Erfinder : GRILL, Michael
Magnesitstrasse 6
A-8700 Leoben (AT)
Erfinder : GRAF, Gerhard
Nagelschmiedgasse 6
A-8700 Leoben (AT)

(74) Vertreter : Pawloy, Heinrich, Dr. et al
Riemergasse 14
A-1010 Wien (AT)

## Beschreibung

Die Erfindung betrifft ein Verfahren zur Herstellung von reinem, insbesondere zur Herstellung feuerfester Erzeugnisse geeignetem Magnesiumoxid aus Magnesiumsilikat- und Magnesium-hydrosilikat-Materialien, wie Olivin, Serpentin, Garnierit oder dgl., wobei das Ausgangsmaterial mit Salzsäure aufgeschlossen wird, die dabei verbliebenen Rückstände von der Aufschlußtrübe abgetrennt werden und aus der so erhaltenen Rohsole die als Verunreinigungen anzusehenden Sesquioxide und andere Verunreinigungen durch Zugabe einer pH-steigernden Substanz ausgefällt werden, die Niederschläge abgetrennt werden und die so erhaltene Magnesiumchloridlösung einer thermischen Zersetzung, insbesondere durch Sprühröstung, unterworfen wird, bei der Magnesiumoxid gewonnen und Chlorwasserstoff wiedergewonnen wird.

Als Ausgangsmaterial für dieses Verfahren kommen die sogenannten ultramafitischen Gesteine der Gruppe Peridotit, Dunit, Harzburgit und dgl., deren Umwandlungsprodukte, die landläufig als Serpentin oder Serpentinit bezeichnet werden, die Verwitterungsprodukte obiger Gesteine, die bei deren Aufarbeitung anfallenden Halb- und Nebenprodukte sowie industrielle Nebenund Abfallprodukte ähnlicher Zusammensetzung in Betracht, sofern sie einen MgO-Gehalt von mindestens 15 Gew.% aufweisen. Diese Materialien werden nachstehend unter der Bezeichnung "Serpentin" bzw. "Rohserpentin" zusammengefußt.

Bei bekannten Verfahren dieser Art wird als pH-steigernde Substanz zum Ausfällen der Sesquioxide in der Regel Magnesiumoxid eingesetzt, und zwar zumeist in Form von kaustisch gebrannter Magnesia. Die Anwendung dieses Fällungsmittels hut jedoch Nachteile. Die Serpentine und ähnliche Ausgangsmaterialien haben im allgemeinen einen hohen Gehalt an Eisen und anderen Sesquioxidverunreinigungen und es sind große Zusatzmengen an Fällungsmittel erforderlich. Da alle Sorten kaustischer Magnesia teuer sind, weil sie nur unter beträchtlichem Aufwand, insbesondere an thermischer Energie, hergestellt werden können, ergibt sich aus dem Einsatz von kaustischer Magnesia als Fällungsmittel eine große wirtschaftliche Belastung. Wenn man das als Endprodukt des Verfahrens anfallende reine Magnesiumoxid als Fällungsmittel einsetzt, sind je nach dem Gehalt des Rohserpentins oder ähnlichen Ausgangsmaterials an Eisen und anderen Sesquioxidverunreinigungen bis zu etwa 30 Gew.% des anfallenden Magnesiumoxids in einem inneren Kreislauf zu führen, was wirtschaftlich nicht vertretbar ist.

Aus der US-PS 2398493 ist es bekannt, einer durch Salzsäureaufschluß von Serpentin hergestellten Magnesiumchloridtrübe als Fällungsmittel der Verunreinigungen calcinierten Serpentin zuzusetzen.

Diese Arbeitsweise hat jedoch den Nachteil, daß der Kieselsäureanteil des Serpentins durch den Calcinierbrand in eine Form gebracht wird, die in der Magnesiumchloridtrübe leichter löslich oder suspendierbar ist, was zur Folge hat, daß bei der folgenden Abtrennung der Rückstände bzw. der Niederschläge ein höherer Kieselsäureanteil in der Magnesiumchloridsole verbleibt und damit im Endprodukt ein höherer $SiO_2$-Gehalt auftritt. Außerdem bewirkt dieser erhöhte Gehalt an amorpher bzw. gelöster Kieselsäure in der Magnesiumchloridtrübe, daß die bei der nachfolgenden Fällung auftretenden $Fe(OH)_3$— und anderen Hydroxidniederschläge von schleimiger Beschaffenheit und daher schlecht filtrierbar sind. Schließlich bedingt der Brand des Serpentins auch einen beträchtlichen, insbesondere energetischen Aufwand.

Aufgabe der Erfindung ist es, ein Verfahren eingangs erwähnter Art zu schaffen, bei dem die angeführten Nachteile vermieden sind, und das eine wirtschaftliche Betriebsführung und die Bildung gut filtrierbarer Hydroxidniederschläge ermöglicht.

Das erfindungsgemäße Verfahren eingangs erwähnter Art ist dadurch gekennzeichnet, daß als pH-steigernde Substanz zum Ausfällen der Oxide von Eisen und von Aluminium feingemahlener Rohserpentin mit einer Körnung von 0 bis 1 mm, vorzugsweise von 0 bis 0,1 mm, eingesetzt wird.

Mit diesem Fällungsmittel wird eine vollständige Fällung des Aluminiums und eine weitgehende Fällung von dreiwertigen Eisen im pH-Bereich unter 5 erreicht.

Falls im Ausgangsmaterial zweiwertiges Eisen vorliegt und auch dieses zweiwertige Eisen entfernt werden soll, kann man gemäß einer hierauf gerichteten Ausführungsform des erfindungsgemäßen Verfahrens zur überführung des zweiwertigen Eisens zu fällbarem dreiwertigen Eisen Luft und/oder ein anderes Oxidationsmittel, wie Chlor oder Wasserstoffperoxid $H_2O_2$, unter intensivem Rühren der Rohsole in diese einbringen. Falls im Ausgangmaterial zweiwertiges Mangan vorliegt und entfernt werden soll, ist dieses durch Oxidation in vierwertiges Mangan überzuführen. Dies kann im Rahmen einer Oxidationsbehandlung, die für das überführen von zweiwertigem Eisen in dreiwertiges Eisen vorgenommen wird, erfolgen ; man kann auch für die Oxidation des Mangans eine die Oxidationsbehandlung des Eisens ergänzende Oxidationsbehandlung vornehmen.

Die beim erfindungsgemäßen Verfahren ablaufende Fällung kann sowohl in diskontinuierlicher als auch in kontinuierlicher Arbeitsweise durchgeführt werden.

Einer der Vorteile des erfindungsgemäßen Verfahrens besteht darin, daß das Ausgangsmaterial lediglich zerkleinert werden muß, aber ansonst nicht vorbehandelt, insbesondere nicht gebrannt zu werden braucht.

Im einzelnen läuft der Fällungsvorgang in folgender Weise ab : Anfangs steigt nach Zugabe des Rohserpentins zu der aus der Aufschlußtrübe durch Abtrennung des ungelöst gebliebenen Aufschlußrückstandes erhaltenen Rohsole der pH-Wert der Rohsole schnell bis etwa 4 an, wodurch die Oxidation des zunächst in der sauren Rohsole noch zweiwertigen Eisens zur dreiwertigen Form des Eisens begünstigt wird ; dies zieht wiederum eine verhältnismäßig schnelle Fällung von Verunreinigungen zu Anfang des gesamten Vorganges nach sich. Später fällt der pH-Wert als Folge der Oxidation von $Fe^{++}$ zu $Fe^{+++}$ etwas ab, um dann wieder anzusteigen. Dieser Anstieg des pH-Wertes verläuft stetig und langsam, wobei der pH-Wert unter 5 bleibt.

Es ist günstig, wenn der als Fällungsmittel eingesetzte Rohserpentin in einer zwischen dem 1 1/2-fachen und 2 1/2-fachen des stöchiometrischen Bedarfes liegenden Menge der Rohsole zugesetzt wird. Als stöchiometrischer Bedarf wird dabei jene Menge an Rohserpentin angesehen, deren Gehalt an MgO zur Neutralisierung der Azidität der Rohsole ausreicht ; die Azidität der Rohsole ist durch die in der sauren Rohsole vorliegende Menge an freier HC1 sowie durch den Gehalt der Rohsole an der Fällung zugänglichen oxidischen Verunreinigungen gegeben, wobei sowohl die oxidischen Verunreinigungen, welche in der Rohsole vor der Zugabe des als Fällungsmittel dienenden Rohserpentins anwesend waren, als auch die oxidischen Verunreinigungen, welche mit dem als Fällungsmittel dienenden Rohserpentin in die Rohsole eingebracht worden sind, in Rechnung zu stellen sind.

Weiter ist es vorteilhaft, wenn man für das durch Zugabe von Rohserpentin zur Rohsole bewirkte Ausfällen von Verunreinigungen die Temperatur der Rohsole über 80°C hält.

Eine weitere vorteilhafte Ausführungsform des erfindungsgemässen Verfahrens ist dadurch gekennzeichnet, daß nach Abschluß der durch Zugabe von Rohserpentin zur Rohsole bewirkten Fällung von Verunreinigungen allenfalls in der Sole noch vorhandenes Eisen sowie Mangan, Nickel und andere in der Sole verbliebene Sesquioxidverunreinigungen in bekannter Weise durch Zugabe hiefür bekannter, pH-steigernder Substanzen ausgefällt werden, wobei vorzugsweise kaustische Magnesia oder ein beim Magnesitbrennen anfallender Flugstaub zugegeben wird.

Eine Variante dieser Ausführungsform ist dadurch gekennzeichnet, daß man die durch die Zugabe von Rohserpentin zur Rohsole bei einem unter 5 liegenden pH-Wert durchgeführte Ausfällung nur bis zum Ausfallen der Hauptmenge des Eisens- und Aluminiumhydroxids führt und daß man dann den Fällungsvorgang durch Steigerung des pH-Wertes auf 6 bis 7 mittels einer kleinen Menge kaustischer Magnesia schnell zu Ende führt. Man kann dabei z.B.

die durch Zugabe von Rohserpentin bewirkte Ausfällung über etwa vier Stunden führen und den nachfolgenden Fällungsvorgang, bei dem der pH-Wert durch Zugabe kaustischer Magnesia angehoben wird, z.B. über weitere zwei Stunden.

Die Erfindung wird nun an Hand von Beispielen weiter erläutert.

**Beispiel 1 :** Es wurden 1730 kg Rohserpentin, der 728 kg MgO, 122 kg $Fe_2O_3$, 4,66 kg NiO und 5 kg CaO enthielt, mit 7330 kg Salzsäure, welche einen Gehalt von 1330 kg Cl⁻ hatte, aufgeschlossen. Von der Aufschlußtrübe wurde ein unlöslich gebliebener Aufschlußrückstand in der Menge von ca. 710 kg abgetrennt und so 8350 kg saure Rohsole erhalten. Diese Rohsole, welche 713 kg MgO, 113 kg $Fe_2O_3$, 4,6 kg NiO, 1330 kg Cl⁻ und 1,8 kg CaO enthielt, wurde mit 647 kg Rohserpentin in der Körnung von 0 bis 0,1 mm als Fällungsmittel versetzt und es wurde in die Rohsole, deren Temperatur auf über 80°C gehalten wurde, unter intensivem Rühren Luft eingeleitet. Der pH-Wert stieg auf ca. 4 an und es war die Fällung nach mehreren Stunden beendet. Das ausgefällte Material wurde zusammen mit den ungelöst gebliebenen Anteilen des als Fällungsmittel zugesetzten Rohserpentins abgetrennt, wobei sich ein Filterkuchen mit 823 kg ergab. Der Filterkuchen enthielt 225 kg MgO, 157 kg $Fe_2O_3$, 1 kg NiO und 1,4 kg CaO. Die verbliebene Reinsole enthielt 748 kg MgO, 0,08 kg $Fe_2O_3$, 5,15 kg NiO, 1324 kg Cl und 3 kg CaO.

**Beispiel 2 :** Es wurden 1585 kg Rohserpentin, der 667 kg MgO, 112 kg $Fe_2O_3$, 4,27 kg NiO und 4,59 kg CaO enthielt, mit 6746 kg Salzsäure, welche einen Gehalt von 1220 kg Cl⁻ hatte, aufgeschlossen. Von der Aufschlußtrübe wurde ein unlöslich gebliebener Aufschlußrückstand in der Menge von ca. 625 kg abgetrennt und so 7706 kg saure Rohsole erhalten. Diese Rohsole, welche 643 kg MgO, 104 kg $Fe_2O_3$, 4,20 kg NiO, 1220 kg Cl⁻ und 1,8 kg CaO enthielt, wurde mit 597 kg Rohserpentin in der Körnung von 0 bis 0,1 mm als Fällungsmittel versetzt und es wurde in die Rohsole, deren Temperatur auf über 80°C gehalten wurde, unter intensivem Rühren Luft eingeleitet. Der pH-Wert stieg auf ca. 4 an und wurde nach 4 Stunden Reaktionsdauer durch Zufuhr von 98 kg Flugstaub schnell auf pH 6,8 angehoben. Der Flugstaub enthielt 82 kg MgO, 5,20 kg $Fe_2O_3$ und 2,60 kg CaO. Dadurch konnte die Fällung binnen 1 Stunde vollständig gestaltet werden. Das ausgefällte Material wurde zusammen mit den ungelöst gebliebenen Anteilen der Fällungsmittel Rohserpentin und kaustische Magnesia abgetrennt, wobei sich ein Filterkuchen einer Menge von 830 kg ergab. Er enthielt 255 kg MgO, 145 kg $Fe_2O_3$, 1,85 kg CaO und 4,27 kg NiO. Die verbliebene Reinsole (7571 kg) enthielt 721 kg MgO, < 0,01 kg $Fe_2O_3$, 4,25 kg CaO, < 0,01 kg NiO und 1210 kg Cl⁻.

## Patentansprüche

1. Verfahren zur Herstellung von reinem, insbesondere zur Herstellung feuerfester Erzeugnisse geeignetem Magnesiumoxid aus Magnesiumsilikat- und Magnesiumhydrosilikat-Materialien, wie Olivin, Serpentin, Garnierit oder dgl., wobei das Ausgangsmaterial mit Salzsäure aufgeschlossen wird, die dabei verbliebenen Rückstände von der Aufschlußtrübe abgetrennt werden und aus der so erhaltenen Rohsole die als Verunreinigungen anzusehenden Sesquioxide und andere Verunreinigungen durch Zugabe einer pH-steigernden Substanz ausgefällt werden, die Niederschläge abgetrennt werden und die so erhaltene Magnesiumchloridlösung einer thermischen Zersetzung, insbesondere durch Sprührösten, unterworfen wird, bei der Magnesiumoxid gewonnen und Chlorwasserstoff wiedergewonnen wird, dadurch gekennzeichnet, daß als pH-steigernde Substanz zum Ausfällen der Oxide von Eisen und von Aluminium feingemahlener Rohserpentin mit einer Körnung von 0 bis 1 mm, vorzugsweise von 0 bis 0,1 mm, eingesetzt wird.

2. Verfahren nach Anspruch 1, dadurch gekennzeichnet, daß zwecks überführung von im Ausgangsmaterial vorhandenem zweiwertigen Eisen zu fällbarem dreiwertigen Eisen Luft und/oder ein anderes Oxidationsmittel unter intensivem Rühren der Rohsole in diese eingebracht wird.

3. Verfahren nach Anspruch 1 oder 2, dadurch gekennzeichnet, daß für das durch Zugabe von Rohserpentin zur Rohsole bewirkte Ausfällen von Verunreinigungen die Temperatur der Rohsole über 80°C gehalten wird.

4. Verfahren nach einem der Ansprüche 1 bis 3, dadurch gekennzeichnet, daß der als Fällungsmittel eingesetzte Rohserpentin in einer zwischen dem $1\frac{1}{2}$-fachen und dem $2\frac{1}{2}$-fachen des stöchiometrischen Bedarfes liegenden Menge der Rohsole zugesetzt wird.

5. Verfahren nach einem der Ansprüche 1 bis 4, dadurch gekennzeichnet, daß nach Abschluß der durch Zugabe von Rohserpentin zur Rohsole bewirkten Fällung von Verunreinigungen allenfalls in der Sole noch vorhandenes Eisen sowie Mangan, Nickel und andere in der Sole verbliebene Sesquioxidverunreinigungen in bekannter Weise durch Zugabe hiefür bekannter, pH-steigernder Substanzen ausgefällt werden, wobei vorzugsweise kaustische Magnesia oder ein beim Magnesitbrennen anfallender Flugstaub zugegeben wird.

6. Verfahren nach einem der Ansprüche 1 bis 4, dadurch gekennzeichnet, daß man die durch die Zugabe von Rohserpentin zur Rohsole bei einem unter 5 liegenden pH-Wert durchgeführte Ausfällung nur bis zum Ausfallen der Hauptmenge des Eisensund Aluminiumhydroxids führt und daß man dann den Fällungsvorgang durch Steigerung des pH-Wertes auf 6 bis 7 mittels kaustischer Magnesia schnell zu Ende führt.

## Claims

1. A process for the preparation of pure magnesium oxide, especially suitable for the preparation of refractory products, from magnesium silicate and magnesium hydrosilicate materials such as olivine, serpentine, garnierite, or the like wherein the starting material is decomposed (digested) with hydrochloric acid, the residues are separated from the decomposition slurry and the contaminating sesquioxides and other contaminants are precipitated from the such obtained crude brine by the addition of a pH increasing substance, the precipitates are separated and the magnesium chloride solution thus obtained is subjected to thermal decomposition, particularly by spray calcination, whereby magnesium oxide is obtained and hydrogen chloride is recovered, characterized in that finely ground crude serpentine having a grain size of between 0 and 1 mm, preferably between 0 and 0.1 mm, is used as the pH increasing substance for precipitating the oxides of iron and aluminum.

2. A process according to claim 1, characterized in that for the purpose of converting bivalent iron, present in the starting material, into precipitable trivalent iron air and/or another oxidizing agent is introduced into the crude brine under intensive stirring.

3. A process according to either claim 1 or 2, characterized in that for the precipitation of contaminants effected by the addition of crude serpentine to the crude brine the temperature of the latter is held above 80°C.

4. A process according to any one of claims 1 to 3, characterized in that the crude serpentine used as precipitating agent is added to the crude brine in an amount between $1\frac{1}{2}$ and $2\frac{1}{2}$ times the stoichiometric requirement.

5. A process according to any one of claims 1 to 3, characterized in that, upon completion of the precipitation of contaminants effected by the addition of crude serpentine to the crude brine, any iron, manganese, nickel or other sesquioxide contaminants remaining in the brine are precipitated in known manner by the addition of pH increasing substances known for that purpose, preferably with addition of caustic magnesia or flue dust resulting from calcining magnesia.

6. A process according to any one of claims 1 to 4, characterized in that the precipitation carried out by the addition of crude serpentine to crude brine at a pH value of below 5, is continued only until most of the iron and aluminum hydroxide has been precipitated, the precipitation process then being rapidly completed by increasing the pH value to between 6 and 7 by means of caustic magnesia.

## Revendications

1. Procédé de production de magnésie pure, convenant notamment pour la production d'articles réfractaires, à partir de matières contenant du silicate de magnésium et de l'hydrosilicate de magnésium, telles que l'olivine, la serpentine, la garniérite, etc., dans lequel la matière de départ est attaquée par l'acide chlorhydrique, les résidus qui subsistent alors sont séparés de la solution trouble d'attaque et les sesquioxydes devant être considérés comme impuretés et d'autres impuretés sont précipitées dans la saumure brute ainsi obtenue par addition d'une substance élevant le pH, les précipités sont séparés et la solution de chlorure de magnésium ainsi obtenue est soumise à une décomposition thermique, notamment par grillage par pulvérisation, à l'occasion de laquelle la magnésie est recueillie et le chlorure d'hydrogène est récupéré, caractérisé en ce qu'on utilise comme substance élevant le pH pour précipiter les oxydes de fer et d'aluminium, de la serpentine brute finement broyée en grains de 0 à 1 mm, de préférence de 0 à 0,1 mm.

2. Procédé suivant la revendication 1, caractérisé en ce que pour transformer le fer divalent présent dans la matière de départ en fer trivalent précipitable, on fait passer de l'air et/ou un autre agent oxydant dans la saumure brute en agitant énergiquement cette dernière.

3. Procédé suivant la revendication 1 ou 2, caractérisé en ce qu'on maintient la température de la saumure brute au-dessus de 80°C pour la précipitation d'impuretés provoquée par addition de serpentine brute à la saumure brute.

4. Procédé suivant l'une des revendications 1 à 3, caractérisé en ce que la serpentine brute utilisée comme précipitant est ajoutée à la saumure brute en une quantité comprise entre 1,5 et 2,5 fois la quantité stoechiométriquement nécessaire.

5. Procédé suivant l'une des revendications 1 à 4, caractérisé en ce qu'après la fin de la précipitation d'impuretés occasionnée par l'addition de serpentine brute à la saumure brute, on précipite le fer de toute façon encore présent dans la saumure ainsi que le manganèse, le nickel et d'autres impuretés sesquioxydiques restant dans la saumure, d'une manière connue par addition de substances connues à cet effet, élevant le pH, et on ajoute alors de préférence de la magnésie caustique ou des cendres volantes obtenues lors de la combustion de la magnésite.

6. Procédé suivant l'une des revendications 1 à 4, caractérisé en ce qu'on ne conduit la précipitation occasionnée par l'addition de serpentine brute à la saumure brute a un pH de valeur inférieure à 5 que jusqu'à la précipitation de la majeure partie de l'hydroxyde de fer et de l'hydroxyde d'aluminium et en ce qu'on achève ensuite rapidement le processus de précipitation par l'élévation de la valeur du pH à 6-7 au moyen de magnésie caustique.